# FASCICULE DE BREVET EUROPEEN

(11) **EP 2 401 156 B1**
(45) Date de publication et mention de la délivrance du brevet: **18.12.2024**
(21) Numéro de dépôt: 10707574.9
(22) Date de dépôt: 22.01.2010
(51) Int. Cl.: B41M 1/34, C09D 11/101, G06K 1/12, C03C 15/00, C03C 23/00, B41M 3/14

(54) **PROCEDE ET DISPOSITIF DE MARQUAGE D'OBJETS**
VERFAHREN UND VORRICHTUNG ZUM MARKIEREN VON OBJEKTEN
METHOD AND DEVICE FOR MARKING OBJECTS

(30) Priorité: 23.01.2009 FR 0950417
(43) Date de publication de la demande: 04.01.2012
(73) Titulaire: ATHEOR, 34080 Montpellier (FR)
(72) Inventeur: Borras, Jean-Denis, 34000 Montpellier (FR)
(74) Mandataire: Regimbeau
(86) Numéro de dépôt international: PCT/FR2010/050099
(87) Numéro de publication internationale: WO 2010/084291

(56) Documents cités:
- EP-A1- 1 826 005
- WO-A1-01/32789
- WO-A1-2010/029273
- WO-A2-2004/048451
- US-A- 5 204 381
- SALLENAVE X ET AL: "Tuning and transcription of the supramolecular organization of a fluorescent silsesquioxane precursor into silica-based materials through direct photochemical hydrolysis-polycondensation and micropatterning", ADVANCED FUNCTIONAL MATERIALS, WILEY VCH, WIENHEIM, DE, vol. 19, no. 3, 18 December 2008 (2008-12-18), pages 404 - 410, XP001520297, ISSN: 1616-301X, Retrieved from the Internet <URL:http://www3.interscience.wiley.com/cgi-bin/fulltext/121575254/PDFSTART> [retrieved on 20090909]
- DANZEBRINK, ROLF; BIEHL, SASKIA; MASCHEK, ROMAN; MEHRTENS, ANDREE; AEGERTER, MICHEL ANDRE: "Fabrication of structured coatings by ink -jet and pad printing process using hybrid sols", ADVANCES IN SCIENCE AND TECHNOLOGY, vol. 20, 1999, pages 19 - 26, XP009122498

## Description

### Domaine technique

La présente invention concerne un procédé de marquage permettant de greffer des marqueurs d'identification, indélébiles, éventuellement non visibles, sur des objets en verre, céramique ou silicium notamment.

Le domaine de l'invention est plus particulièrement mais de manière non limitative celui de la traçabilité industrielle, légale et sécuritaire, ainsi que la lutte contre la fraude et la contrefaçon.

### Etat de la technique antérieure

Le marquage des contenants (bouteilles, flacons, ampoules, ...) est un outil important dans le cadre de la protection des marques, la traçabilité des produits et la lutte contre la contrefaçon, par exemple pour les industries de la parfumerie, de la pharmacie, des spiritueux.

Pour des applications de type réglementaires (affichage de numéro de lot, date limite de consommation, ...) le marquage doit être lisible et, conformément à la réglementation européenne, indélébile. Pour d'autres applications comme la lutte contre la contrefaçon (vente de produite contrefaits) ou la lutte contre les marchée parallèles (vente illégale ou en contrebande de produits originaux) il doit être invisible à l'oeil nu et idéalement infalsifiable. Dans ce cas le marquage doit pouvoir être lu uniquement par un appareil approprié.

De part la nature du support (essentiellement du verre) ce marquage présente des difficultés particulières et aucune technique utilisée à l'heure actuelle n'est pleinement satisfaisante. Parmi ces dernières on peut citer :
- la sérigraphie, qui a l'inconvénient de ne pas permettre de marquage unitaire, c'est-à-dire différent à chaque fois à moins de stocker tous les marquages possibles ;
- le marquage par laser CO2 ou YAG, qui altère le verre par des microfissures. Ce marquage a l'inconvénient d'engendrer des amorces de ruptures inacceptables dans certains cas (industrie pharmaceutique) ;
- le marquage par laser femtoseconde, qui est de mise en oeuvre difficile en milieu industriel avec des coûts prohibitifs ;
- Le marquage par jet d'encre, qui est effaçable au solvant lorsque l'encre est à base de composants organiques ;

Les procédés sol-gel ont été identifiés depuis quelques années comme un substitut possible aux encres à base de résines organiques pour les applications de marquage. En effet, ils permettent la production de polymères inorganiques vitreux, pouvant être greffés solidement sur le verre ou la silice à relativement basse température, et insensibles aux solvants une fois polymérisés.

Dans la plupart des cas, les précurseurs de ces composée sol-gel peuvent être stockés dans des solvants usuels. La réaction chimique conduisant à la solidification du matériau se déclenche en présence d'eau et comprend des phases d'hydrolyse et de polycondensation des molécules.

Les procédés sol-gel se prêtent bien à l'inclusion de chromophores ou fluorophores organiques, qui ne subissent pas de dégradations thermiques au cours de la solidification. En choisissant judicieusement les précurseurs, il est également possible de préparer des matériaux sol-gel dopés dans lesquels les molécules organiques incluses subissent un minimum d'interactions entre elles et avec le milieu, et conservent leurs propriétés de fluorescence une fois le matériau solidifié.

On connaît le document US 6,863,923 de Kalleder et al qui décrit des procédés et des compositions pour réaliser des substrats d'impression. Ce document décrit notamment la réalisation d'une pâte d'impression basée sur un précondensat à base de polyorganosiloxanes obtenus par un procédé sol-gel et constituant une matrice dans laquelle est inclue au moins un élément colorant, luminescent, conducteur et/ou catalytique. Cette pâte peut être appliqué sur un support selon la forme ou le motif désiré et densifié par traitement thermique, à une température inférieure à la température de transition vitreuse de la matrice ainsi formée. La température de densification à appliquer dans ce procédé est néanmoins de l'ordre de 400 °C, ce qui constitue une limitation sérieuse du point de vue des chromophores utilisables et dans les possibilités d'application en pratique.

On connaît aussi le document WO 2004/048451 de Jensen et al. qui décrit des substrats à base de polymères hydrophiles, utilisables comme encre pour des applications de sécurité et de lutte contre la fraude, et permettant l'inclusion de protéines fluorescentes de protéorhodopsine. Cette protéine a la propriété remarquable d'évoluer de manière prévisible entre différents états en fonction des longueurs d'ondes d'excitation et de leur séquence temporelle, ce qui permet de réaliser des encres difficiles à contrefaire. Plusieurs compositions sont décrites dans le document, dont certaines sont compatibles avec des techniques d'impression à jet d'encre. Les matrices décrites pour immobiliser la protéorhodopsine incluent des polymères organiques (polyacrylamides, gélatine, alcool polyvinylique) mais aussi un sol-gel à base de poly(glyceryl)silicate (PGS). Néanmoins dans ce dernier cas, la fabrication et la conservation nécessitent de basses températures, de l'ordre de 4°C, difficilement compatibles avec des applications industrielles.

Les contraintes thermiques et surtout le fait que la réaction de polymérisation (hydrolyse-polycondensation) se déclenche en présence d'eau posent des problèmes de conservation des précurseurs et de maîtrise des procédés d'inscription, qui rendent les procédés sol-gel classiques difficiles à utiliser dans des applications de marquage industrielles.

Le but de la présente invention est de proposer un procédé facile à mettre en oeuvre et à contrôler en environnement industriel, de coût raisonnable, permettant d'insérer des marqueurs d'identification indélébiles visibles ou non à l'oeil nu, sur des produits en verre, céramique ou silicium notamment.

### Exposé de l'invention

Cet objectif est atteint avec un procédé pour marquer un objet tel que défini dans la revendication 1.

Le précurseur sol-gel est polymérisé selon un procédé d'hydrolyse-polycondensation catalysé par un photogénérateur d'acide (PAG),
- lequel photogénérateur d'acide libère un acide sous l'action d'une lumière ultraviolette,
- lequel acide, en présence d'humidité, provoque l'hydrolyse-polycondensation dudit précurseur sol-gel.

Le précurseur sol-gel et le photogénérateur d'acide (PAG) peuvent être déposés en deux opérations successives.

La présente invention apporte ainsi une solution aux problèmes de l'art antérieur, en mettant en oeuvre des précurseurs sol-gel dont l'hydrolyse-polycondensation peut être catalysée par un acide photo-généré, communément appelé PAG (Photo-Acid Generator) dans la littérature. Les PAGs constituent un ensemble de composés qui ont la propriété de subir des réactions de clivage photochimique sous l'action d'un rayonnement lumineux, en produisant un acide. Ils sont communément utilisés pour la polymérisation d'époxydes ou la réticulation de résines photosensibles par exemple.

Les PAGs commencent à être également utilisés comme catalyseurs de procédés sol-gel.

On connaît l'article de X. Sallenave, O.J. Dautel, G. Wantz, P. Valvin, J-P. Lère-Porte et J.J.E. Moreau , « Tuning and Transcription of the Supramolecular Organization of a Fluorescent Silsesquioxane Precursor into Silica-Based Materials through Direct Photochemical Hydrolysis-Polycondensation and Micropatterning", Adv. Funct. Matter. 2009, 19, 404-410, dans lequel les auteurs décrivent la synthèse d'un chromophore précurseur sol-gel destiné à être déposé et greffé sur le verre ou le silicium tout en évitant son agrégation afin de maintenir ses propriétés de fluorescence à l'état solide. Les auteurs décrivent également un mode d'hydrolyse-polycondensation catalysé par photo-générateur d'acide (PAG). Ce dernier libère de l'acide triflique sous un rayonnement UV à 356 nm. L'acide ainsi généré et la présence d'humidité provoque l'hydrolyse-polycondensation des fonctions triéthoxysilanes du précurseur.

Suivant des caractéristiques particulières,
- l'encre peut comprendre en outre au moins un chromophore intégré dans la matrice sol-gel par adsorption physique ;
- le chromophore peut appartenir à l'une quelconque des familles de composés suivants : composés organiques, nanocristaux, terres rares.

Suivant un mode de mise en oeuvre, le chromophore intégré dans la matrice sol-gel peut être un chromophore photochromique, c'est-à-dire dont les propriétés optiques (notamment d'absorption spectrale de la lumière et/ou de fluorescence) sont durablement modifiées de manière réversible par une exposition à la lumière. Le procédé selon l'invention peut alors comprendre en outre au moins l'une des étapes :
- d'inscription d'information par illumination du chromophore photochromique avec un faisceau de lumière comprenant des premières longueurs d'onde, de telle sorte à provoquer un changement d'état optique, d'un premier état vers un second état, dudit chromophore dans les zones illuminées,
- d'effacement par illumination du chromophore photochromique avec un faisceau de lumière comprenant des secondes longueurs d'onde, lesquelles pouvant être sensiblement identiques auxdites premières longueurs d'ondes, de telle sorte à provoquer un changement d'état optique, dudit second état vers ledit premier état, du chromophore photochromique dans les zones illuminées.

Suivant des caractéristiques particulières de l'invention,
- l'objet peut être constitué de l'un quelconque des matériaux suivants : verre, céramique, silicium ;
- l'encre est déposée sur la surface de l'objet par projection.

Le procédé selon l'invention peut comprendre des étapes de :
- polymérisation sélective dans certaines zones du précurseur sol-gel, par exposition locale à un faisceau de lumière ultraviolette,
- élimination par rinçage de l'encre comprenant le précurseur sol-gel non polymérisé.

Le procédé selon l'invention peut en outre comprendre une étape d'altération sélective dans certaines zones de l'encre polymérisée par exposition locale à un faisceau de lumière intense, de telle sorte à en dégrader significativement les propriétés optiques.

Suivant d'autres caractéristiques particulières,
- la forme du marqueur greffé comprend l'un quelconque des marquages suivants : caractères alphanumériques, code à barres, code DotMatrix, code DataMatrix, code QR, logo, code Braille ;
- le marqueur greffé peut être invisible à l'oeil nu.

Suivant un autre aspect de l'invention, il est proposé un dispositif pour marquer un objet tel que défini dans la revendication 11.

Suivant des modes de mise en oeuvre particuliers,
- les moyens de dépôt peuvent comprendre une tête d'impression à jet d'encre ;
- les moyens d'exposition peuvent comprendre un laser ultraviolet, et des moyens de déflexion du faisceau dudit laser permettant de balayer la surface du précurseur sol-gel.

Suivant encore un autre aspect de l'invention, il est proposé un système de suivi d'objets mettant en oeuvre un dispositif de marquage selon l'invention, caractérisé en ce qu'il comprend des moyens de lecture optoélectroniques comprenant :
- des moyens d'illumination du marqueur greffé à au moins une première longueur d'onde,
- des moyens d'imagerie dudit marqueur greffé, sensibles à au moins une seconde longueur d'onde, et
- des moyens d'identification et de décodage dudit marqueur greffé.

Le procédé selon l'invention repose donc sur la mise en oeuvre de procédés sol-gel dont l'hydrolyse-polycondensation est catalysée par un acide photo-généré (PAG). De cette manière, la polymérisation et le greffage du marqueur au support sont contrôlables par l'application d'un rayonnement lumineux, ce qui, par contraste avec l'art antérieur, ouvre la voie à de nouveaux procédés d'inscription plus efficaces du point de vue de la mise en oeuvre industrielle et également applicables sur une plus grande variété de supports ou de produits.

Le procédé sol-gel mis en oeuvre a pour fonction de produire un matériau vitreux, fortement greffé au support de telle sorte à être quasiment indélébile et en particulier insensible aux solvants.

Le support est de manière préférentielle mais nullement limitative un verre. Le procédé selon l'invention peut bien entendu être mise en oeuvre pour le marquage de tout autre type de matériau, comme par exemple du silicium ou une céramique.

Le procédé sol-gel mis en oeuvre peut également avoir pour fonction de fixer une ou plusieurs sortes de chromophores, tout en évitant leur agrégation pour maintenir leurs propriétés de fluorescence à l'état solide. Il peut également permettre de protéger les chromophores contre les dégradations de l'environnement. On défini comme chromophores des éléments qui réfléchissent au moins une longueur d'onde du spectre lumineux et/ou qui émettent de la lumière par fluorescence à au moins une longueur d'onde d'émission en réponse à une excitation à au moins une longueur d'onde d'excitation. Ce peut être par exemple des composés d'origine organique, des nanocristaux, ou des terres rares.

Les chromophores peuvent avantageusement être incorporés dans la matrice sol-gel par physisorption ou adsorption physique, avec des liaisons faibles de type forces de van der Waals. Cette méthode a l'avantage de permettre l'utilisation d'une grande variété de chromophores. Par ailleurs, la faiblesse des interactions permet de conserver les propriétés de fluorescence des molécules organiques en particulier à l'issu de la polymérisation.

Il existe également des précurseurs sol-gel tels que les silsesquioxane, dans lesquels un fragment organique est lié de façon covalente au réseau de silice. On obtient ainsi des matériaux hybrides organique-inorganique fluorescents dont l'hydrolyse-polycondensation peut également être catalysée par un PAG.

Un marqueur tel que réalisé par le procédé selon l'invention peut, de manière non limitative, être un support d'information (par exemple information sur l'origine et l'identité du produit, marquages réglementaires à destination du consommateur, suivi de produits sur un site de fabrication), ou un système d'authentification (signature secrète et infalsifiable, logo). Cette information peut, de manière également non limitative, être portée par :
- une couleur, une signature spectrale,
- un spectre de fluorescence dans le visible, dans l'infrarouge, dans l'ultraviolet,
- un motif ou un ensemble de motifs constituant par exemple un ensemble de caractères alphanumériques, un code à barres, un code DataMatrix éventuellement imprimé en Dotmatrix, un code Q-R, des caractères écrits en braille,
- une épaisseur, pour être par exemple lisible en braille, au toucher,
- ou toute combinaison de ces éléments.

Le marqueur peut être visible à l'oeil nu, ou invisible et lisible uniquement par des moyens optoélectroniques. Il peut également comporter une combinaison d'informations visibles et d'informations invisibles sans moyens optoélectroniques appropriés. Pour les applications de lutte contre la contrefaçon, les marquages visibles ou non peuvent être conçus de telle sorte à garder des propriétés réactives, telles que des changements de couleur sous l'action d'un champ électromagnétique ou d'une température. Ces propriétés réactives peuvent être également utilisées pour le suivi des conditions environnementales auquel aurait été soumis l'objet. L'information portée par le marqueur peut également être lisible au toucher (marqueur suffisamment épais lisible en braille).

Le marqueur peut encore par exemple être un logo de marque déposée comprenant des indications comme des numéros de lots. Ainsi la destruction de ces indications, par exemple dans le cas d'une vente sur un marché parallèle qui n'est pas illégale en elle-même, entraîne la dégradation du logo de la marque, ce qui peut constituer une contrefaçon illégale.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- la figure 1 illustre le processus de dépôt et de greffage du précurseur sol-gel sur l'objet,
- la figure 2 illustre la réalisation d'un marqueur par écriture laser directe,
- la figure 3 illustre la réalisation d'un marqueur par destruction sélective, et
- la figure 4 présente un dispositif optoélectronique pour la lecture des marqueurs greffés.

Suivant un mode de mise en oeuvre préférentiel mais nullement limitatif du procédé selon l'invention, un dispositif est réalisé pour l'inscription et la lecture de marqueurs fluorescents 12 en forme de code DotMatrix greffés sur des contenants en verre tels que des bouteilles de parfums ou de spiritueux. Ce code est destiné à contenir des informations 25 d'origine, de lot, etc. codées de manière habituelle sur 11 digits.

L'encre utilisée pour la fabrication du marqueur est basée sur un précurseur sol-gel fluorescent hydrolysable par catalyse avec un acide photo-généré (PAG), dont la synthèse est décrite dans l'article de X. Sallenave et al., Adv. Funct. Matter. 2009, 19, 404-410, cité précédemment. Le précurseur est un silsesquioxane, le PAG du N-trifluorométhylsulfonyloxy-1,8-naphthalimide (NIOTf). Le NIOTf présente une absorption importante autour de 350 nm, longueur d'onde à laquelle celle du silsesquioxane est faible. Lorsqu'il est soumis à un tel rayonnement, le NIOTf libère de l'acide triflique qui, en présence d'humidité, provoque l'hydrolyse-polycondensation des fonctions triéthoxysilanes du précurseur silsesquioxane. L'humidité présente dans l'air environnant est suffisante pour que la réaction ait lieu. Ce précurseur a l'avantage d'être très soluble dans la plupart des solvants organiques courants, et d'être très fluorescent. Dissout dans du tétrahydrofurane (THF) et soumis à un éclairage à 430 nm, il émet par fluorescence de la lumière verte à 530 nm. La solution retenue pour la réalisation de l'encre comprend 30 mg/mL de silsesquioxane dans du THF et du NIOTf dans un rapport molaire silsesquioxane/NIOTf de 1/0,5. La solution ainsi formée est stable plusieurs jours dans le noir. Cette encre constitue bien entendu un exemple nullement limitatif de précurseur sol-gel utilisable dans la mise en oeuvre du procédé selon l'invention.

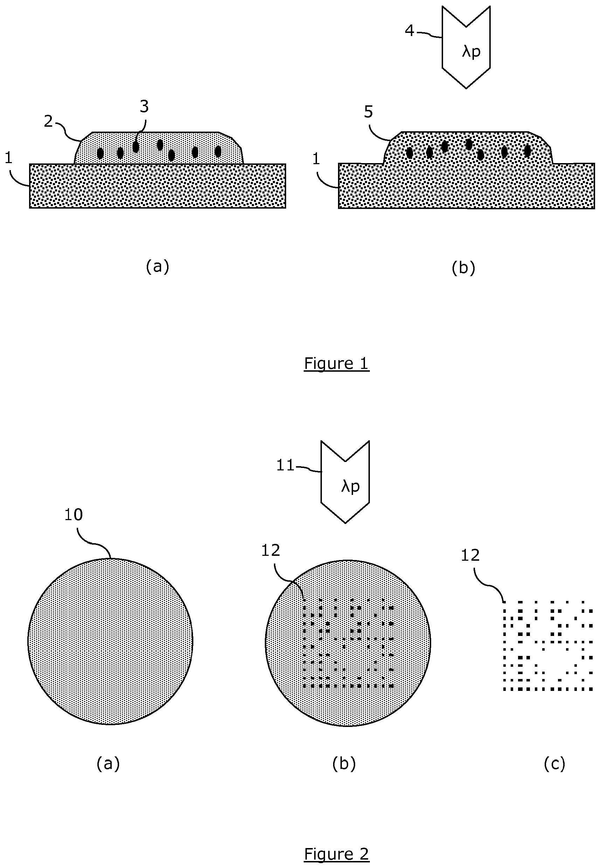

La figure 1 illustre le processus de greffage du marqueur 5 sur l'objet 1, et notamment :
- le dépôt d'une solution de précurseur sol-gel 2 comprenant éventuellement des chromophores 3, laquelle solution se présente sous la forme d'une pâte ou d'un liquide dont l'état est stable tant qu'elle n'a pas été soumise à un rayonnement ultraviolet,
- le greffage par hydrolyse-polycondensation catalysée par une exposition à un rayonnement ultraviolet 4.

L'épaisseur du dépôt pour la réalisation d'un marqueur discret est typiquement de l'ordre de 0.6 µm. D'autres épaisseurs sont bien entendu possibles.

En référence à la figure 2, suivant un mode de réalisation préférentiel, le procédé de greffage du marqueur comprend des étapes de :
figure 2(a), dépôt de la solution ou encre contenant le précurseur sol-gel sur l'objet 1, sous la forme d'un aplat 10 sensiblement uniforme sur une petite surface de l'objet. Ce dépôt est effectué de préférence par projection de gouttelettes avec une buse ;
   - figure 2(b), polymérisation du précurseur de telle sorte à réaliser un motif 12 tel que le code DotMatrix de l'exemple, par écriture directe avec un faisceau laser ultraviolet 11. Le laser utilisé est un laser Q-Switch à crystal de Nd:YAG avec une longueur d'onde d'émission de 355 nm, qui est adaptée au PAG utilisé. Le faisceau 11 du laser est focalisé à la surface de l'objet et déplacé par un système de scanners à miroirs de telle sorte à polymériser des points différents de la surface à chaque impulsion ;
   - figure 2(c), élimination du précurseur sol-gel non polymérisé par rinçage avec un solvant, de telle sorte qu'il ne reste plus sur l'objet 1 que le motif 12 polymérisé.

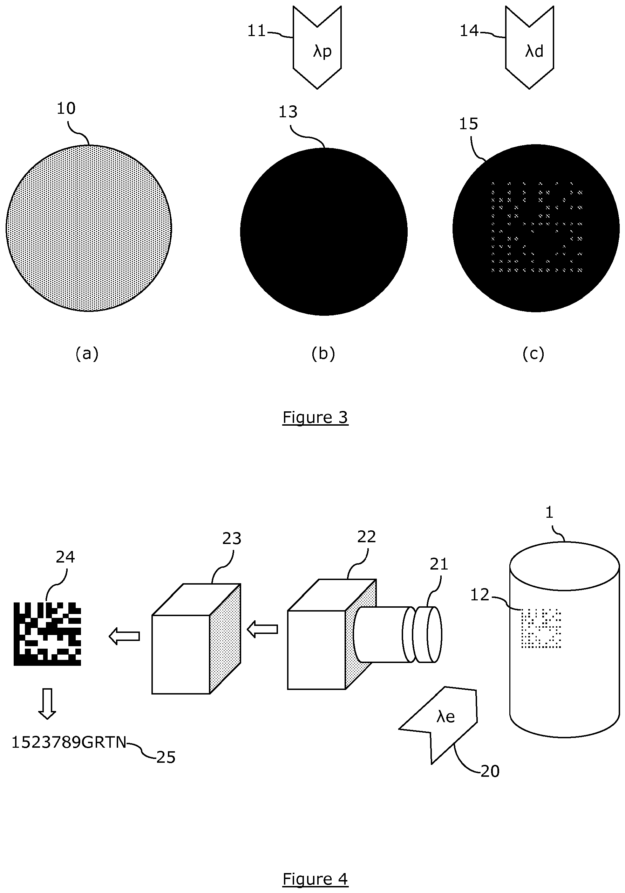

La figure 3 présente une variante de procédé de greffage du marqueur, qui comprend des étapes de :
- figure 3(a), dépôt de la solution ou encre contenant le précurseur sol-gel sur l'objet sous la forme d'un aplat 10 sensiblement uniforme, sur une petite surface de l'objet. Ce dépôt est effectué de préférence par projection de gouttelettes avec une buse ;
- figure 3(b), greffage de la totalité du précurseur sol-gel déposé 13 sur l'objet 1 par exposition avec une lampe ou un laser UV 11 dont le faisceau couvre la totalité de la surface de sol-gel ;
- figure 3(c), altération ou destruction sélective du chromophore ou du chromophore et de la matrice polymérisée, de telle sorte à en modifier sensiblement les caractéristiques spectrales et/ou de fluorescence. Cette altération est effectuée par écriture directe avec un faisceau laser 14 focalisé sur la surface de telle sorte à réaliser un motif 15 tel que le code DotMatrix de l'exemple. L'altération ou la destruction peuvent être obtenus par photoblanchiment irréversible du chromophore, ou par dégradation thermique de la matrice ou des molécules en fonction de la longueur d'onde et de l'énergie lumineuse utilisée. Le faisceau du laser 14 est déplacé à la surface de l'objet par un système de scanners à miroirs pour altérer des points successifs ;

Bien entendu, dans l'une ou l'autre variante décrite précédemment, la polymérisation sélective (figure 2) ou l'altération sélective (figure 3) peuvent être réalisées en positif (le laser inscrit les pleins du motif, c'est-à-dire les zones noires du motif 12 ou les zones blanches du motif 15) ou en négatif (le laser inscrit les vides du motif, c'est-à-dire au moins une partie des zones blanches du motif 12 ou au moins une partie des zones noires du motif 15).

L'inscription du marqueur par balayage laser présente l'avantage de permettre des distances de travail plus grandes que les techniques basées par exemple sur une inscription par jet d'encre, pour lesquelles la distance de travail n'excède pas 2 cm. Par exemple, il devient possible de travailler à une distance de l'ordre de 5 cm ou plus, ce qui rend possible le greffage d'un marqueur dans la piqûre d'une bouteille de Champagne, c'est-à-dire la partie en retrait sous la bouteille.

La figure 4 présente un dispositif optoélectronique pour la lecture de marqueurs fluorescents. Un tel dispositif peut se présenter par exemple sous la forme d'un système portable pour des contrôles effectués par un opérateur, ou sous la forme d'un système automatique installé sur une ligne de production. Il est en particulier bien adapté à la lecture de codes matriciels ou de codes à barre.

L'utilisation de la fluorescence pour lire un marqueur permet de rendre cette opération plus robuste et moins sensible à l'environnement, et donc aussi plus facile à automatiser. En effet, la mesure devient insensible à la réflectivité spectrale du marqueur et de l'environnement, surtout si on prend soin de filtrer la lumière de telle sorte que seule la lumière à la longueur d'onde de fluorescence atteigne le capteur. Cela permet aussi de greffer les mêmes marqueurs sur des objets de couleur différente, et également, dans le cas des objets transparents comme les bouteilles, de ne pas être affecté par la couleur du contenu.

Le marqueur greffé sur l'objet 1, dans l'exemple illustré à la figure 4, est réalisé sous la forme d'un code DotMatrix 12 à partir d'un précurseur silsesquioxane. Soumis à un éclairage 20 comprenant de la lumière à une longueur d'onde d'excitation de 430 nm, il émet par fluorescence de la lumière verte à 530 nm. L'image du marqueur 12 est enregistrée par un système d'imagerie optoélectronique 22 (par exemple une caméra CCD avec une optique d'imagerie) pourvu d'un filtre optique 21 dont la bande passante spectrale est centrée sur la longueur d'onde de fluorescence 530 nm. L'image du code DotMatrix est analysée par un calculateur 23 comprenant un microprocesseur et/ou un FPGA qui reconstitue le code DataMatrix 24 par grossissement des points du code DotMatrix au moyen d'un algorithme de dilatation et en extrait l'information 25.

Dans le mode de mise en oeuvre préférentiel du procédé selon l'invention, le code greffé est écrit sous un format DotMatrix, constituée de points. Ce format n'est pas standard contrairement au format DataMatrix constitué de carrés, mais il a l'avantage de simplifier les opérations d'écriture par laser, de réduire le temps de marquage et d'être plus discret. Il est bien entendu aussi possible d'écrire directement un code DataMatrix sur l'objet.

Suivant des modes de réalisations particuliers,
- le chromophore peut être un colorant organique de type 5,5'-Dichloro-11-diphenylamino-3,3'-diethyl-10,12-ethylenethiatricarbocyanine perchlorate, avec un maximum d'absorption à 823 nm ;
- le chromophore peut être un nanocrystal ou quantum dot à base de PbS, avec un pic d'émission à 850 nm ;
- le chromophore peut être une terre rare de type néodymium(III) Nd3+ avec des raies d'émission à 865 nm (détectable par exemple avec un capteur CCD) et 1045 nm ;
- L'illumination 20 du dispositif du dispositif de lecture peut fonctionner en mode pulsé, pour limiter par exemple le photoblanchiment des chromophores fluorescents ;
- les aplats 10 peuvent être réalisé par toute autre méthode telles que par exemple la sérigraphie, l'application du précurseur sol-gel avec un outil sur la surface ... ;
- l'exposition d'un aplat de précurseur sol-gel au rayonnement ultraviolet peut être réalisé au travers d'un masque partiellement opaque, de telle sorte à ne réticuler que les parties exposées, par exemple selon un procédé de photolithographie ;
- le précurseur sol-gel peut être déposé uniquement selon la forme finale du marqueur, puis greffé au support par une exposition globale au rayonnement ultraviolet ;
- le précurseur sol-gel peut être déposé uniquement selon la forme finale du marqueur, par un procédé d'impression à jet d'encre, puis greffé au support par une exposition globale au rayonnement ultraviolet ;
- le précurseur sol-gel hydrolysable par catalyse peut être déposé dans un premier temps sur l'objet, puis le PAG ensuite par-dessus, en deux opérations successives ;
- il peut aussi être procédé au dépôt d'un aplat sensiblement uniforme de précurseur sol-gel, suivi d'une inscription par jet d'encre du PAG selon le motif désiré, puis d'une insolation UV et d'un rinçage du précurseur non polymérisé ;
- un marqueur peut être fabriqué en déposant des couches successives d'encre pouvant comprendre des chromophores différents et pouvant également être de formes différentes. L'exposition au rayonnement ultraviolet pour déclencher la polymérisation peut avoir lieu entre chaque dépôt de couche ou globalement ;
- un marqueur peut être greffé sur tout autre matériau que du silicium, de la céramique ou du verre. En particulier, lorsqu'une encre contenant un précurseur sol-gel conformément au procédé selon l'invention est déposée sur un matériau poreux tels que le papier ou le carton, elle pénètre dans les fibres, et une fois réticulée, constitue également un marqueur greffé indélébile résistant au trempage dans des solvants. De la même manière, le procédé est également applicable sur d'autres supports tels que du plastique ou du bois.

Suivant des modes de réalisation, il peut être mis en oeuvre des chromophores de type photochromiques, c'est-à-dire dont les propriétés optiques (notamment d'absorption spectrale de la lumière et/ou de fluorescence) sont modifiées de manière réversible par une exposition à la lumière. De tels chromophores peuvent ainsi présenter au moins deux états optiques, avec dans chaque état des caractéristiques d'absorption spectrale de la lumière (donc de couleur) et/ou de fluorescence différentes. La transition entre les états se fait par illumination du chromophore photochromique avec des longueurs d'ondes lumineuses et éventuellement des niveaux d'énergie déterminés, dépendant du chromophore. Les chromophores photochromiques peuvent être intégrés à la matrice sol-gel notamment par adsorption. Suivant un exemple de mise en oeuvre non limitatif :
- Un marqueur est inscrit sur un objet. Ce marqueur comprend, intégré à la matrice sol-gel de manière sensiblement homogène, au moins un chromophore photochromique dans un état initial ;
- Une inscription, par exemple d'un code DataMatrix ou d'un logo, est effectuée en illuminant localement le marqueur, et donc le chromophore photochromique, à des longueurs d'ondes et des niveaux d'énergie aptes à provoquer un changement durable des propriétés optiques des zones illuminées du chromophore (notamment l'absorption spectrale et/ou la fluorescence). Cette inscription peut être effectuée par exemple par illumination au travers d'un masque, ou en déplaçant un faisceau de lumière focalisée ;
- Cette inscription peut être lue avec des moyens appropriés ;
- L'inscription peut être effacée en illuminant le chromophore photochromique avec une lumière comprenant des longueurs d'ondes appropriée, qui permettent de le ramener dans son état initial.

Les cycles d'inscription et d'effacement du chromophore photochromique peuvent ainsi être répétés autant de fois que nécessaire, par exemple pour mettre à jour des informations sur le produit. Tous types de chromophores photochromiques sont susceptibles d'être utilisés dans le cadre de l'invention. Dans le cadre de la lutte anti-contrefaçon ou pour des applications liées à la traçabilité, il peut également être mis en oeuvre des chromophores photochromiques dont le changement d'état est déclenché par une illumination destinée à lire l'inscription avec des moyens non autorisés, ou simplement par une exposition à la lumière du jour, pour des produits devant normalement demeurer dans l'obscurité. L'inscription peut consister en une illumination globale du chromophore photochromique modifiant globalement son état optique. Il peut être mis en oeuvre des chromophores photochromiques bistables, c'est-à-dire qui restent stables dans au moins deux états après la fin d'une l'illumination ayant provoqué une transition, ou des chromophores photochromiques monostables, c'est-à-dire qui retournent dans leur état initial à la fin de l'illumination ayant provoqué une transition.

Suivant des modes de réalisation, il est aussi possible d'utiliser des chromophores dont les propriétés optiques sont affectées, temporairement ou durablement, par la pression, le frottement et/ou l'abrasion (par triboluminescence notamment), de telle sorte à pouvoir détecter par exemple une tentative de grattage du marqueur.

Bien sûr, l'invention n'est pas limitée aux exemples qui viennent d'être décrits et de nombreux aménagements peuvent être apportés à ces exemples sans sortir du cadre de l'invention.

## Revendications

1. Procédé pour marquer un objet (1) pour la traçabilité, l'authentification et la lutte contre la contrefaçon, comprenant le greffage par procédé sol-gel d'un marqueur d'identification (5) fluorescent, quasiment indélébile et insensible aux solvants sur ledit objet (1), **caractérisé en ce qu'**il comprend des étapes de :
- dépôt par projection sur au moins une partie de la surface dudit objet (1), d'une encre (2) comprenant un précurseur sol-gel fluorescent et hydrolysable par catalyse avec un acide photogénéré (PAG), et d'un photogénérateur acide (PAG),
- polymérisation par exposition à une lumière ultraviolette (4) d'au moins une partie dudit précurseur sol-gel déposé, par hydrolyse-polycondensation catalysée par le photogénérateur d'acide (PAG), de telle sorte à constituer un marqueur de forme prédéterminée greffé (5) sur ledit objet,
**caractérisé en ce que** la forme du marqueur greffé comprend l'un quelconque des marquages suivants : caractères alphanumériques, code à barres, code DotMatrix, code DataMatrix, code QR, logo, code Braille.

2. Procédé selon la revendication 1, **caractérisé en ce que** l'encre (2) comprend en outre au moins un chromophore (3) intégré dans la matrice sol-gel par adsorption physique.

3. Procédé selon la revendication 2, **caractérisé en ce que** le chromophore (3) appartient à l'une quelconque des familles de composés suivantes : composés organiques, nanocristaux, terres rares.

4. Procédé selon la revendication 2, **caractérisé en ce que** le chromophore (3) est un chromophore photochromique.

5. Procédé selon la revendication 4, **caractérisé en ce qu'**il comprend en outre au moins l'une des étapes :
- d'inscription d'information par illumination du chromophore photochromique avec un faisceau de lumière comprenant des premières longueurs d'onde, de telle sorte à provoquer un changement d'état optique, d'un premier état vers un second état, dudit chromophore dans les zones illuminées,
- d'effacement par illumination du chromophore photochromique avec un faisceau de lumière comprenant des secondes longueurs d'onde, lesquelles pouvant être sensiblement identiques auxdites premières longueurs d'ondes, de telle sorte à provoquer un changement d'état optique, dudit second état vers ledit premier état, du chromophore photochromique dans les zones illuminées.

6. Procédé selon l'une quelconque des revendications précédentes, **caractérisé en ce que** l'objet (1) est constitué de l'un quelconque des matériaux suivants : verre, céramique, silicium, de préférence du verre.

7. Procédé selon l'une quelconque des revendications précédentes, **caractérisée en ce que** l'encre (2) est déposée sur la surface de l'objet (1) par projection par des moyens de dépôt comprenant une tête d'impression à jet d'encre, dans lequel le précurseur sol-gel de l'encre (2) est déposé uniquement selon la forme finale du marqueur, par un procédé d'impression à jet d'encre, puis greffé au support par une exposition globale au rayonnement ultraviolet.

8. Procédé selon l'une quelconque des revendications précédentes, **caractérisée en ce qu'**il comprend en outre des étapes de
- polymérisation sélective dans certaines zones (12) du précurseur sol-gel, par exposition locale à un faisceau de lumière ultraviolette (11), et
- élimination par rinçage de l'encre comprenant le précurseur sol-gel non polymérisé.

9. Procédé selon l'une quelconque des revendications précédentes, **caractérisée en ce qu'**il comprend en outre une étape d'altération sélective dans certaines zones (15) de l'encre polymérisée (13), par exposition locale à un faisceau de lumière intense (14), de telle sorte à en dégrader significativement les propriétés optiques.

10. Procédé selon l'une quelconque des revendications précédentes, **caractérisé en ce que** le marqueur greffé (5) est invisible à l'oeil nu.

11. Dispositif pour marquer un objet (1) pour la traçabilité, l'authentification et la lutte contre la contrefaçon, comprenant des moyens pour greffer par procédé sol-gel un marqueur d'identification (5) fluorescent, quasiment indélébile et insensible aux solvants sur ledit objet (1), **caractérisé en ce qu'**il comprend :
- une encre (2) comprenant un précurseur sol-gel fluorescent et hydrolysable par catalyse avec un acide photogénéré (PAG), et un photogénérateur acide (PAG),
- des moyens de dépôt aptes à déposer par projection sur au moins une partie de la surface dudit objet (1) ladite encre (2),
- des moyens d'illumination aptes à exposer à une lumière ultraviolette (4) au moins une partie dudit précurseur sol-gel déposé, de telle sorte à provoquer sa polymérisation par hydrolyse-polycondensation catalysée par le photogénérateur d'acide (PAG), et constituer un marqueur de forme prédéterminée greffé (5) sur ledit objet, la forme du marqueur greffé comprenant l'un quelconque des marquages suivants : caractères alphanumériques, code à barres, code DotMatrix, code DataMatrix, code QR, logo, code Braille, **caractérisé en ce que** les moyens de dépôt comprennent une tête d'impression à jet d'encre, et **caractérisé en ce que** les moyens d'exposition comprennent un laser ultraviolet et des moyens de déflexion du faisceau (11) dudit laser permettant de balayer la surface du précurseur sol-gel (10).

12. Système de suivi d'objets mettant en oeuvre un dispositif de marquage selon la revendication 11, **caractérisé en ce qu'**il comprend des moyens de lecture optoélectroniques comprenant :
- des moyens d'illumination du marqueur greffé à au moins une première longueur d'onde (20),
- des moyens d'imagerie (22) dudit marqueur greffé, sensibles à au moins une seconde longueur d'onde, et
- des moyens d'identification et de décodage (23) dudit marqueur greffé.

## Patentansprüche

1. Verfahren zum Markieren eines Objekts (1) zur Rückverfolgbarkeit, Authentifizierung und Bekämpfung von Fälschungen, das die Pfropfung durch ein Sol-Gel-Verfahren eines quasi unauslöschlich und unempfindlich gegenüber Lösungsmitteln fluoreszierenden Identifikationsmarkers (5) auf dem Objekt (1) umfasst, **dadurch gekennzeichnet, dass** es die folgenden Schritte umfasst:
- Aufbringen durch Projektion auf mindestens einen Teil der Oberfläche des Objekts (1) einer Tinte (2), die einen fluoreszierenden und durch Katalyse mit einer photogenerierten Säure (PAG) hydrolysierbaren Sol-Gel-Vorläufer umfasst, und eines sauren Photogenerators (PAG),
- Polymerisation durch Belichtung mit einem ultravioletten Licht (4) von mindestens einem Teil des aufgebrachten Sol-Gel-Vorläufers durch Hydrolyse-Polykondensation, katalysiert durch den Säure-Photogenerator (PAG), so dass ein auf dem Objekt aufgepfropfter Marker (5) mit vorbestimmter Form gebildet wird,
**dadurch gekennzeichnet, dass** die Form des aufgepfropften Markers eine der folgenden Markierungen umfasst: alphanumerische Zeichen, Strichcode, DotMatrix-Code, DataMatrix-Code, QR-Code, Logo, Braille-Code.

2. Verfahren nach Anspruch 1, **dadurch gekennzeichnet, dass** die Tinte (2) ferner mindestens einen Chromophor (3) umfasst, der durch physikalische Adsorption in die Sol-Gel-Matrix integriert ist.

3. Verfahren nach Anspruch 2, **dadurch gekennzeichnet, dass** der Chromophor (3) zu einer der folgenden Verbindungsfamilien gehört: organische Verbindungen, Nanokristalle, Seltene Erden.

4. Verfahren nach Anspruch 2, **dadurch gekennzeichnet, dass** der Chromophor (3) ein photochromer Chromophor ist.

5. Verfahren nach Anspruch 4, **dadurch gekennzeichnet, dass** es ferner mindestens einen der folgenden Schritte umfasst:
- Einschreiben von Informationen durch Beleuchten des photochromen Chromophors mit einem Lichtstrahl, der erste Wellenlängen umfasst, so dass eine Änderung des optischen Zustands des Chromophors in den beleuchteten Bereichen von einem ersten Zustand in einen zweiten Zustand bewirkt wird,
- Löschen durch Beleuchten des photochromen Chromophors mit einem Lichtstrahl, der zweite Wellenlängen umfasst, die im Wesentlichen identisch mit den ersten Wellenlängen sein können, so dass eine Änderung des optischen Zustands des photochromen Chromophors in den beleuchteten Bereichen von dem zweiten Zustand in den ersten Zustand bewirkt wird.

6. Verfahren nach einem der vorhergehenden Ansprüche, **dadurch gekennzeichnet, dass** das Objekt (1) aus einem der folgenden Materialien besteht: Glas, Keramik, Silizium, vorzugsweise Glas.

7. Verfahren nach einem der vorhergehenden Ansprüche, **dadurch gekennzeichnet, dass** die Tinte (2) auf die Oberfläche des Objekts (1) durch Projektion durch Aufbringmittel aufgebracht wird, die einen Tintenstrahldruckkopf umfassen, wobei der Sol-Gel-Vorläufer (2) nur in der finalen Form des Markers durch ein Tintenstrahldruckverfahren aufgebracht und dann auf den Träger durch eine globale Belichtung mit ultravioletter Strahlung aufgepfropft wird.

8. Verfahren nach einem der vorhergehenden Ansprüche, **dadurch gekennzeichnet, dass** es ferner folgende Schritte umfasst:
- selektive Polymerisation in bestimmten Bereichen (12) des Sol-Gel-Vorläufers durch lokale Belichtung mit einem ultravioletten Lichtstrahl (11), und
- Entfernen der Tinte, die den nicht polymerisierten Sol-Gel-Vorläufer enthält, durch Abspülen.

9. Verfahren nach einem der vorhergehenden Ansprüche, **dadurch gekennzeichnet, dass** es ferner einen Schritt der selektiven Veränderung der polymerisierten Tinte (13) in bestimmten Bereichen (15) durch lokale Belichtung mit einem intensiven Lichtstrahl (14) derart umfasst, dass die optischen Eigenschaften signifikant verschlechtert werden.

10. Verfahren nach einem der vorhergehenden Ansprüche, **dadurch gekennzeichnet, dass** der aufgepfropfte Marker (5) für das bloße Auge unsichtbar ist.

11. Vorrichtung zum Markieren eines Objekts zur Rückverfolgbarkeit, Authentifizierung und Bekämpfung von Fälschungen, die Mittel umfasst, um durch ein Sol-Gel-Verfahren einen quasi unauslöschlichen und gegenüber Lösungsmitteln unempfindlichen fluoreszierenden Identifikationsmarker (5) auf das Objekt (1) aufzupfropfen, **dadurch gekennzeichnet, dass** sie umfasst:
- eine Tinte (2), die einen fluoreszierenden und durch Katalyse mit einer photogenerierten Säure (PAG) hydrolysierbaren Sol-Gel-Vorläufer umfasst, und einen sauren Photogenerator (PAG),
- Aufbringungsmittel, die imstande sind, die Tinte (2) auf mindestens einen Teil der Oberfläche des Objekts (1) durch Projektion aufzubringen,
- Beleuchtungsmittel, die imstande sind, mindestens einen Teil des aufgebrachten Sol-Gel-Vorläufers einem ultravioletten Licht (4) derart auszusetzen, dass seine Polymerisation durch Hydrolyse-Polykondensation, katalysiert durch den Säure-Photogenerator (PAG), hervorgerufen wird und einen Marker mit vorbestimmter Form zu bilden, der auf das Objekt aufgepfropft (5) wird, wobei die Form des aufgepfropften Markers eine der folgenden Markierungen umfasst: alphanumerische Zeichen, Strichcode, DotMatrix-Code, DataMatrix-Code, QR-Code, Logo, Braille-Code, **dadurch gekennzeichnet, dass** die Aufbringungsmittel einen Tintenstrahldruckkopf umfassen und **dadurch gekennzeichnet, dass** die Belichtungsmittel einen ultravioletten Laser und Mittel zur Ablenkung des Strahls (11) des Lasers umfassen, die es ermöglichen, die Oberfläche des Sol-Gel-Vorläufers (10) abzutasten.

12. System zur Verfolgung von Objekten, das eine Markierungsvorrichtung nach Anspruch 11 verwendet, **dadurch gekennzeichnet, dass** es optoelektronische Lesemittel umfasst, die umfassen:
- Beleuchtungsmittel des aufgepfropften Markers mit mindestens einer ersten Wellenlänge (20),
- Bildgebungsmittel (22) des aufgepfropften Markers, die für mindestens eine zweite Wellenlänge empfindlich sind, und
- Mittel zur Identifizierung und Decodierung (23) des aufgepfropften Markers.

## Claims

1. Method for marking an object (1) for traceability, authentication and anti-counterfeiting purposes, comprising the grafting by sol-gel process of a fluorescent, virtually indelible and solvent-insensitive identification marker (5) onto said object (1), **characterized in that** it comprises the steps of :
- spray deposition on at least part of the surface of said object (1) of an ink (2) comprising a fluorescent sol-gel precursor hydrolyzable by catalysis with a photogenerated acid (PAG), and an acid photogenerator (PAG),
- polymerization by exposure to ultraviolet light (4) of at least part of said deposited sol-gel precursor, by hydrolysis-polycondensation catalyzed by the acid photogenerator (PAG), so as to form a predetermined shape marker grafted (5) onto said object,
**characterized in that** the shape of the grafted marker comprises any of the following markings: alphanumeric characters, bar code, DotMatrix code, DataMatrix code, QR code, logo, Braille code.

2. Process according to claim 1, **characterized in that** the ink (2) additionally comprises at least one chromophore (3) integrated into the sol-gel matrix by physical adsorption.

3. Process according to claim 2, **characterized in that** the chromophore (3) belongs to any one of the following families of compounds: organic compounds, nanocrystals, rare earths.

4. Process according to claim 2, **characterized in that** the chromophore (3) is a photochromic chromophore.

5. Process according to claim 4, **characterized in that** it further comprises at least one of the steps:
- of writing information by illuminating the photochromic chromophore with a beam of light comprising first wavelengths, so as to cause a change of optical state, from a first state to a second state, of said chromophore in the illuminated areas,
- erasing by illuminating the photochromic chromophore with a light beam comprising second wavelengths, which may be substantially identical to said first wavelengths, so as to cause a change of optical state, from said second state to said first state, of the photochromic chromophore in the illuminated areas.

6. Process according to any of the preceding claims, **characterized in that** the object (1) is made of any of the following materials: glass, ceramic, silicon, preferably glass.

7. Process according to any of the preceding claims, **characterized in that** the ink (2) is deposited on the surface of the object (1) by spraying by deposition means comprising an inkjet printhead, wherein the sol-gel precursor of the ink (2) is deposited only according to the final shape of the marker, by an inkjet printing process, and then grafted to the substrate by overall exposure to ultraviolet radiation.

8. Process according to any one of the preceding claims, **characterized in that** it further comprises the steps of
- selective polymerization in certain zones (12) of the sol-gel precursor by local exposure to a beam of ultraviolet light (11), and
- rinsing off the ink containing the non-polymerized sol-gel precursor.

9. Process according to any one of the preceding claims, **characterized in that** it further comprises a step of selective alteration in certain zones (15) of the polymerized ink (13), by local exposure to an intense light beam (14), so as to significantly degrade its optical properties.

10. Process according to any of the preceding claims, **characterized in that** the grafted marker (5) is invisible to the naked eye.

11. Device for marking an object (1) for traceability, authentication and anti-counterfeiting purposes, comprising means for grafting a fluorescent, virtually indelible and solvent-insensitive identification marker (5) onto said object (1) by a sol-gel process, **characterized in that** it comprises :
- an ink (2) comprising a fluorescent sol-gel precursor catalytically hydrolyzable with a photogenerated acid (PAG), and a photogenerated acid (PAG),
- deposition means capable of depositing said ink (2) by spraying onto at least part of the surface of said object (1),
- illumination means capable of exposing at least part of said deposited sol-gel precursor to ultraviolet light (4), so as to cause its polymerization by hydrolysis-polycondensation catalyzed by the photo-acid generator (PAG), and constitute a marker of predetermined shape grafted (5) onto said object, the shape of the grafted marker comprising any one of the following markings : alphanumeric characters, bar code, DotMatrix code, DataMatrix code, QR code, logo, Braille code, **characterized in that** the deposition means comprise an inkjet print head, and **characterized in that** the exposure means comprise an ultraviolet laser and means for deflecting the beam (11) of said laser to scan the surface of the sol-gel precursor (10).

12. Object tracking system implementing a marking device according to claim 11, **characterized in that** it comprises optoelectronic reading means comprising :
- means for illuminating the grafted marker at at least a first wavelength (20),
- imaging means (22) for said grafted marker, sensitive to at least one second wavelength, and
- means for identifying and decoding (23) said grafted marker.
